# EUROPEAN PATENT SPECIFICATION

(11) **EP 1 778 452 B1**
(45) Date of publication and mention of the grant of the patent: **24.08.2011**
(21) Application number: 05748524.5
(22) Date of filing: 25.05.2005
(51) Int. Cl.: B29C 45/17, B29C 45/16

(54) **INJECTION MOLDING MACHINE SHOOTING POT WITH INTEGRAL CHECK VALVE**
SPRITZGIESSMASCHINENSPRITZTOPF MIT INTEGRALEM RÜCKSCHLAGVENTIL
POT D'INJECTION DE MACHINE A MOULER PAR INJECTION DOTE D'UN CLAPET DE NON-RETOUR INTEGRE

(30) Priority: 30.06.2004 US 879576
(43) Date of publication of application: 02.05.2007
(73) Proprietor: Husky Injection Molding Systems S.A., 3401 Dudelange (LU)
(72) Inventor: SERNIUCK, Nicholas W., Oakville, Ontario L6M 3X9 (CA)
(86) International application number: PCT/CA2005/000786
(87) International publication number: WO 2006/002511

(56) References cited:
- EP-A- 0 393 389
- EP-A- 0 624 449
- EP-A2- 0 624 449
- WO-A-02/058908
- JP-A- 2004 130 650
- US-A- 4 710 118
- US-A- 4 717 324
- US-A- 5 112 212
- US-A- 5 200 207

## Description

### TECHNICAL FIELD

The present invention relates to an improved check valve assembly incorporated within the body of a shooting pot cylinder of a coinjection hot runner assembly in an injection molding machine.

### BACKGROUND OF THE INVENTION

Coinjection molding is typically used to mold multi-layered plastic packaging articles having a laminated wall structure. Each layer is typically passed through a different annular or circular passageway in a single nozzle structure and each layer is partially, sequentially, injected through the same gate. Some coinjection hot runner systems include shooting pots to meter material of one plastic resin so that each cavity of a multi-cavity mold receives an accurate dose of that resin in the molding cycle. Some design configurations use check valves to prevent backflow of the resin when the shooting pot discharges the resin through the nozzle.

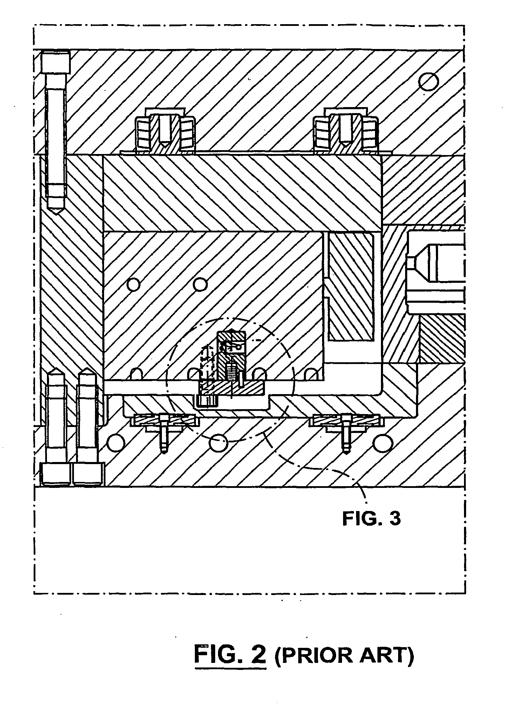

Document EP 0 624 449 A2 discloses a coinjection molding apparatus that includes shooting pots. As can be taken from Figure 2, for example, the shooting pot chambers are defined within the respective manifolds - for example, shooting pot chamber 68 is defined within an associated manifold 61. The same actually applies to the shooting pot chamber 78, which is also defined within its respective manifold.

U.S. Patent No. 4,717,324 to Schad discloses a coinjection hot runner assembly, with shooting pots, that does not use check valves. Instead, rotary valves are used to prevent backflow of the resins during injection from the shooting pots. Rotary valves required external actuation mechanisms which increase cost and complication, also rotary valves are prone to leaking resin.

U.S. Patent No. 4, 710, 118 to Krishnakumar discloses an coinjection hot runner assembly with shooting pots that uses check valves to prevent backflow of resin during injection from the shooting pots. In this patent, the check valves are represented schematically and are shown as enclosed within the manifold, as part of the melt channel. There is no teaching of how the check valves are installed or how they may be serviced, if required.

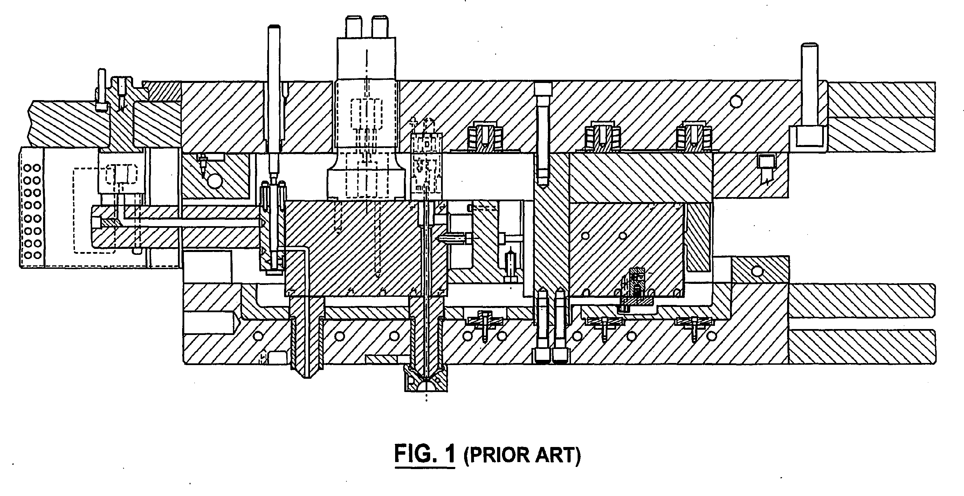

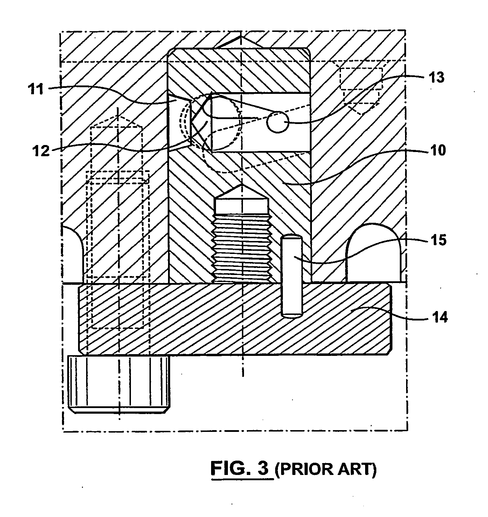

Figures 1-3 show a known check valve configuration installed in a coinjection hot runner manifold. The installation is remote from the shooting pot assembly and occupies space that could otherwise be saved to decrease the size of the overall assembly. Figure 3 shows the detail of the assembly, namely an insert 10, containing a melt channel 11 in which there is a ball (or other occlusion) 12, that is retained by a cross dowel 13. This insert is retained in the manifold by a plate 14, and oriented to the plate by dowel 15 to ensure the inlet/outlet to the melt channel 11 is aligned with the corresponding channel(s) in the manifold (not shown). There is typically one installation for each shooting pot, consequently in a two material coinjection hot runner for a 48 cavity mold, there would be at least 12 check valve installations.

Thus, what is needed is a shooting pot check valve assembly which is easily installed, easily maintained, reliable, and takes up minimal space in the neighborhood of the shooting pot.

### SUMMARY OF THE INVENTION

For solving the mentioned problems, an assembly in accordance with claim 1 is provided. That is, a coinjection hot runner assembly is provided, comprising: a coinjection nozzle (22) having at least two melt channels (21, 26) ending at the same gate; a first manifold (20) having melt channels for supplying a first resin to one of the melt channels (21) of the coinjection nozzle (22); a second manifold (23) having an inlet and an outlet channel (32, 33); an injection molding shooting pot assembly (24) set into the second manifold (23) and disposed between the first and second manifold (20, 23), wherein the shooting pot assembly (24) comprises: a first shooting pot piston (28); a first shooting pot cylinder (27) configured to discharge melt to said outlet channel (33) upon activation of said first shooting pot piston (27); and a first check valve (29) disposed integral within said first shooting pot cylinder (27) and configured to reduce leakage of melt from said first shooting pot cylinder (27) to said inlet channel (32) in response to at least partial discharge of the melt from said first shooting pot cylinder (27) upon activation of said first shooting pot piston (28).

It is an advantage of the present invention to provide shooting pot check valve apparatus whereby injected resin is forcibly and reliably prevented from leaking back into the injection melt : channel, while making installation and maintenance more efficient and less costly.

Furthermore, a unique combination of structure and/or steps is provided for an injection molding shooting pot assembly check valve configured to be installed in a coinjection hot runner with a coinjection nozzle, where the coinjection nozzle has at least two melt channels ending at the same gate. The check valve preferably includes a valve inlet, and a valve outlet. An check valve occlusion is configured to (i) be disposed integral with or immediately adjacent the shooting pot assembly, and (ii) prevent resin leakage to the valve inlet in response to a melt discharge operation of the shooting pot assembly.

Furthermore, a unique combination of structure and/or steps is provided for an injection molding shooting pot assembly check valve configured to be installed in a coinjection hot runner with a coinjection nozzle, the coinjection nozzle having at least two melt channels ending at the same gate. Preferably, the check valve includes an inlet melt channel and an outlet melt channel configured to provide melt to the coinjection nozzle. A shooting pot cylinder is disposed between the inlet melt channel and the outlet melt channel. A shooting pot piston is configured to move within the shooting pot cylinder to discharge melt from the shooting pot cylinder to the outlet melt channel. A check valve is disposed integral with or immediately adjacent the shooting pot cylinder and is configured to prevent melt leakage to the melt inlet channel in response to the discharge of melt from the shooting pot cylinder.

Furthermore, a unique combination of structure and/or steps is provided for an injection molding shooting pot assembly check valve configured to be installed in a coinjection hot runner with a coinjection nozzle, the coinjection nozzle having at least two melt channels ending at the same gate. The check valve includes a shooting pot piston, and a shooting pot cylinder that is configured to discharge melt to an outlet melt channel upon activation of the shooting pot piston. A check valve is disposed integral with or immediately adjacent to the shooting pot cylinder, and is configured to reduce leakage of melt from the shooting pot cylinder to an inlet melt channel in response to at least partial discharge of the melt from the shooting pot cylinder upon activation of the shooting pot piston.

Furthermore, a unique combination of structure and/or steps is provided for an injection molding shooting pot assembly check valve configured to be installed in a coinjection hot runner with a coinjection nozzle, the coinjection nozzle having at least two melt channels ending at the same gate. The check valve includes a shooting pot cylinder, and means for causing a check valve occlusion to move within a check valve chamber that is disposed integral with or immediately adjacent to the shooting pot cylinder, to cause the melt to at least partially fill the shooting pot cylinder. Means are provided for discharging the melt from the shooting pot cylinder through a melt outlet channel, and through a coinjection nozzle into a mold cavity. The means for discharging causes the check valve occlusion to move within a check valve chamber to substantially reduce melt leakage from said shooting pot cylinder to a melt inlet channel.

### BRIEF DESCRIPTION OF THE DRAWINGS

Exemplary embodiments of the presently preferred features of the present invention will now be described with reference to the accompanying drawings.
Figure 1 is a schematic view of a known coinjection hot runner manifold assembly.
Figure 2 is an enlarged view of Figure 1 showing a check valve location.
Figure 3 is an enlarged view of Figure 2 showing the check valve assembly.
Figure 4 is a schematic view of part of a coinjection hot runner manifold assembly according to an embodiment of the present invention.
Figure 5 is a schematic view of part of a coinjection hot runner manifold assembly according to an embodiment not belonging to the present invention.
Figure 6 is a schematic view of part of a coinjection hot runner manifold assembly showing a further alternative according to the preferred embodiment of the present invention.

### DETAILED DESCRIPTION OF THE PREFERRED EMBODIMENT (S)

### 1. Introduction

The present invention will now be described with respect to several embodiments in which an integral check valve is used in the shooting pot of a plastic coinjection molding machine. The coinjection process is partially injecting a first material through the gate followed by partially injecting a second material through the same gate.

### 2. The structure of an Embodiment

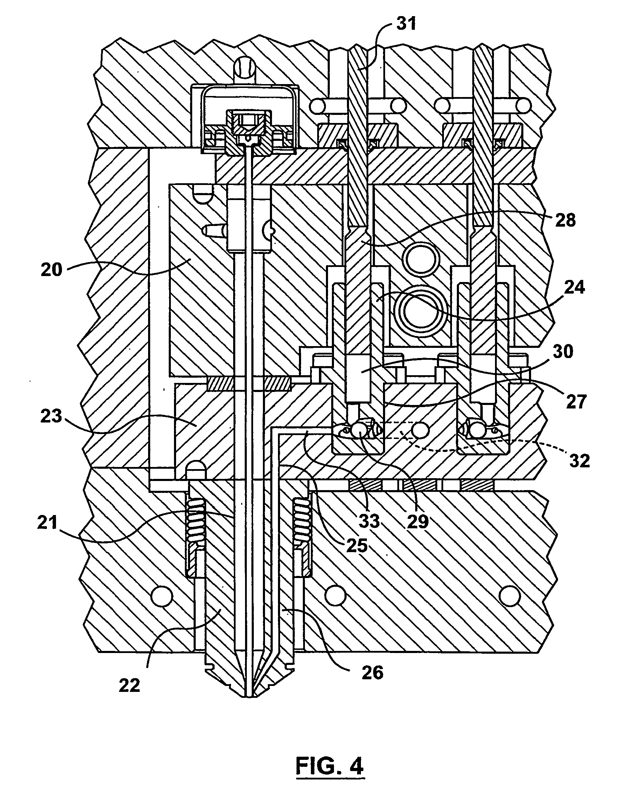

Figure 4 shows a portion of a coinjection hot runner assembly according to an embodiment according to the present invention. A first manifold 20 has shooting pots and melt channels (not shown) for supplying a first resin "A" to a first melt channel 21 in a nozzle 22. A second manifold 23 has at least one shooting pot assembly 24 connected via a melt channel 25 for supplying second resin "C" to a second melt channel 26 in the nozzle 22. The first melt channel 21 and the second melt channel 26 exit the nozzle 22 at the same gate opening. The shooting pot assembly 24 comprises a shooting pot cylinder 27, a shooting pot piston 28, and a check valve 29. The check valve 29 is housed within or - partially within (i.e., integral with) the shooting pot cylinder 27. Also, the preferred embodiment may be adapted for use in nozzles which co-inject three, four, or more resins.

Preferably, the shooting pot assembly 24 is set into the second manifold 23 such that the melt channels therein are aligned with an inlet channel 32 and an outlet 33 channel leading to/from the check valve 29 and shooting pot chamber 30, respectively. With this arrangement, the check valve 29 will act to prevent resin from leaking back into the melt channel when the shooting pot is discharged. Preferably, a check valve 29 is provided for each shooting pot. The check valve 29 may be of any size and shape, depending upon the application.

In the Figure 4 embodiment, the check ball has a ball diameter of about 6,0 mm, a shooting pot piston diameter of about 10,0 mm, and a shooting pot cylinder overall length of about 83,0 mm. However, these dimensions can vary tremendously in size depending on the application.

### 3. The Method of the Embodiment

In operation, resin supplied from the injection unit (not shown) via the inlet channel 32 of the second manifold 23 flows past the check valve 29 to fill the shooting pot chamber 30, thereby displacing the shooting pot piston 28 upward until the predetermined shot size for the chamber 30 is made. The forward (downward) actuation of the shooting pot piston 28 by an actuator 31 causes the "C" resin in the shooting pot chamber 30 to be moved out along channels 25 and 26 to enter the mold cavity (not shown). The movement of the "C" resin by the piston 28 also causes the check valve to block the inlet channel 32 in shooting pot cylinder 27, thereby preventing backflow of the "C" resin towards the injection unit. By including the check valve within, partially within, or adjacent to the shooting pot cylinder, the costs of manufacture, assembly, and maintenance are reduced, and space is saved in the hot runner assembly.

### 4. The Structure of an Embodiment not belonging to the invention

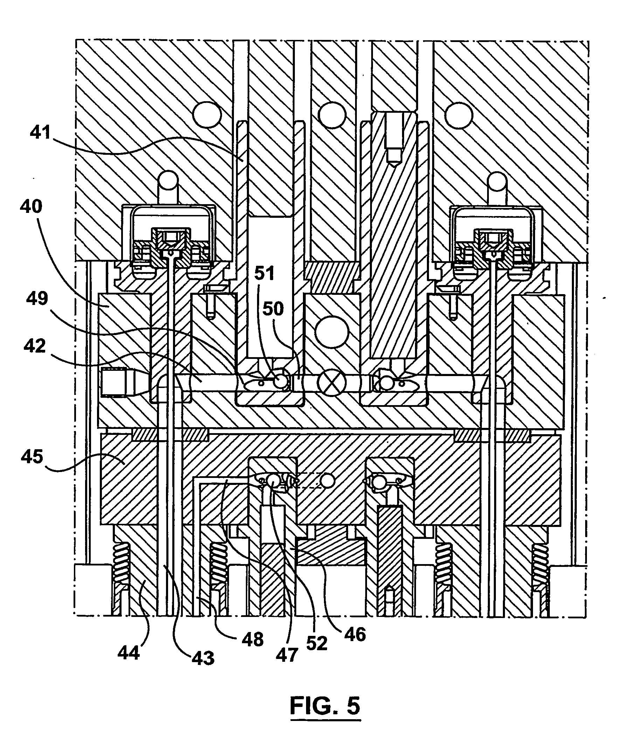

Figure 5 shows an embodiment in which shooting pots are shown in both manifolds of a coinjection hot runner assembly. A first manifold 40 has at least one first shooting pot 41 assembly, and a melt channel 42 for supplying the first resin "A" to a melt channel 43 in the nozzle 44. A first check valve 51 is disposed within the first shooting pot assembly 41. Both the inlet channel 50 and the outlet channel 49 of the check valve 51 are aligned transverse to the centerline of the shooting pot 41.

A second manifold 45 has at least one second shooting pot assembly 46 connected via a melt channel 47 for supplying second resin "C" to a melt channel 48 in the nozzle 44. A second check valve 52 is disposed within the second shooting pot assembly 46. Again, both the inlet channel 53 and the outlet channel 54 of the check valve 52 are aligned transverse to the centerline of the shooting pot 46. The compact configuration of each shooting pot assembly containing its respective check valve allows the shooting pots in the two manifolds to be aligned coaxially. That is, shooting pot 46 is directly beneath shooting pot 41, thereby optimizing the transverse space requirement for housing the shooting pots in their respective manifolds.

### 5. The Method of the Embodiment

In operation, the shooting pots are actuated simultaneously or sequentially according the to the coinjection molding process being employed, and their check valves operate to prevent backflow, as described above with respect to the first embodiment.

### 6. The Structure of a Further Alternative

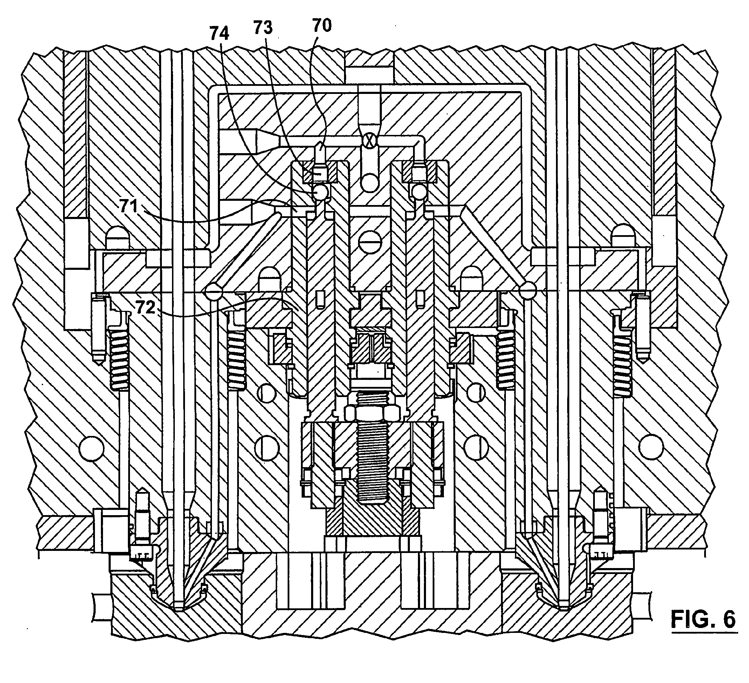

Figure 6 shows the preferred embodiment of the invention in which the inlet channel 70 is aligned coaxially with the centerline of the shooting pot 72, and the outlet channel 71 is transverse to the centerline of the shooting pot 72. This configuration allows the check valve chamber 73 to be extended to allow more travel for the ball, thereby enhancing decompression and/or suckback of the shooting pot. For example, the check valve chamber may be equal to or greater than twice the diameter of the check valve ball 74. The previously-described embodiments aligned the check valve chamber transverse to the shooting pot centerline and consequently were limited in chamber length by the diameter of the shooting pot cylinder. In the Figure 6 embodiment, the length of the chamber faces no such restriction.

### 7. Conclusion

Advantageous features according to the present invention may include:
- In a coinjection hot runner assembly, a shooting pot cylinder containing its own check valve and the associated inlet and outlet channels.
- Aligning the check valve within the shooting pot cylinder so that the inlet and/or outlet channels can be oriented either coaxial to the shooting pot centerline or transverse thereto.
- Aligning the inlet channel coaxially with the shooting pot centerline provides space to extend the check valve chamber thereby providing a decompression/suckback capability in the configuration.

Thus, what has been described is a method and apparatus for efficiently disposing a check valve within, partially within, or adjacent to the shooting pot assembly to provide enhanced sealing, reduced space requirements, and lower assembly and maintenance costs.

The individual components shown in outline or designated by blocks in the attached Drawings are all well-known in the injection molding arts, and their specific construction and operation are not critical to the operation or best mode for carrying out the invention.

While the present invention has been described with respect to what is presently considered to be the preferred embodiments, it is to be understood that the invention is not limited to the disclosed embodiments. To the contrary, the invention is intended to cover various modifications included within the scope of the appended claims. The scope of the following claims is to be accorded the broadest interpretation so as to encompass all such modifications.

## Claims

1. A coinjection hot runner assembly, comprising:
a coinjection nozzle (22) having at least two melt channels (21, 26) ending at the same gate;
a first manifold (20) having melt channels for supplying a first resin to one of the melt channels (21) of the coinjection nozzle (22);
a second manifold (23) having an inlet and an outlet channel (32, 33);
an injection molding shooting pot assembly (24) set into the second manifold (23) and disposed between the first and second manifold (20, 23), wherein the shooting pot assembly (24) comprises:
a first shooting pot piston (28);
a first shooting pot cylinder (27) configured to discharge melt to said outlet channel (33) upon activation of said first shooting pot piston (27); and
a first check valve (29) disposed integral within said first shooting pot cylinder (27) and configured to reduce leakage of melt from said first shooting pot cylinder (27) to said inlet channel (32) in response to at least partial discharge of the melt from said first shooting pot cylinder (27) upon activation of said first shooting pot piston (28).

2. An assembly according to Claim 1, further comprising a check valve ball (74) disposed within a check valve chamber (73), said check valve chamber (73) having a length that is equal to or greater than twice the diameter of said check valve ball (74).

3. An assembly according to Claim 2, wherein a longitudinal axis of said first shooting pot cylinder (27) is disposed substantially co-axial to at least a portion of at least one of the inlet channel (32) and the outlet channel (33).

4. An assembly according to Claim 1, wherein said check valve (29) comprises:
a check valve inlet in fluid communication with said inlet channel (32);
a check valve outlet in fluid communication with said outlet channel (33);
a check valve chamber (73); and
a check valve occlusion (74) configured to (i) move to a first position upon transmission of melt from said inlet channel (32) through said check valve inlet into said first shooting pot cylinder (27), and (ii) move to a second position to reduce leakage of melt into said inlet channel (32) in response to movement of melt from the first shooting pot cylinder (27) to said outlet channel (33).

## Patentansprüche

1. Co-Einspritz-Heißkanalordnung, umfassend:
eine Co-Einspritzdüse (22) mit zumindest zwei Schmelzenkanälen (21, 26), die im gleichen Einlauf enden;
einen ersten Verteiler (20) mit Schmelzenkanälen zum Zuführen eines ersten Harzes zu einem der Schmelzenkanäle (21) der Co-Einspritzdüse (22);
einen zweiten Verteiler (23) mit einem Einlaß- und einem Auslaßkanal (32, 33);
eine Spritzgieß-Einschußtopfanordnung (24), die in dem zweiten Verteiler (23) angeordnet und zwischen dem ersten und dem zweiten Verteiler (20, 23) vorgesehen ist, wobei die Einschußtopfanordnung (24) umfaßt:
einen ersten Einschußtopfkolben (28) ;
einen ersten Einschußtopfzylinder (27), der so ausgebildet ist, daß er die Schmelze (33) nach Aktivierung des ersten Einschußtopfkolbens (28) an den Auslaßkanal abgibt; und
ein erstes Rückschlagventil (29), das integral innerhalb des ersten Einschußtopfzylinders (27) vorgesehen und so ausgebildet ist, daß es das Lecken der Schmelze aus dem ersten Einschußtopfzylinder (27) an den Einlaßkanal (32) auf Grund eines zumindest teilweisen Abgebens der Schmelze aus dem ersten Einschusstopfzylinder (27) bei Aktivierung des ersten Einschußtopfkolbens (28) reduziert.

2. Anordnung nach Anspruch 1, die ferner eine Rückschlagventilkugel (74) aufweist, die innerhalb einer Rückschlagventilkammer (73) angeordnet ist, wobei die Rückschlagventilkammer (73) eine Länge hat, die gleich oder größer als der doppelte Durchmesser der Rückschlagventilkugel (74) ist.

3. Anordnung nach Anspruch 2, bei welcher eine Längsachse des ersten Einschußtopfzylinders (27) im wesentlichen koaxial zu zumindest einem Teil des zumindest einen Einlaßkanals (32) und Auslaßkanals (33) verläuft.

4. Anordnung nach Anspruch 1, bei welcher das Rückschlagventil (29) umfaßt:
einen Rückschlagventileinlaß in Fluidverbindung mit dem Einlaßkanal (32);
einen Rückschlagventilauslaß in Fluidverbindung mit dem Auslaßkanal (33);
eine Rückschlagventilkammer (73); und
ein Rückschlagventilverschluß (74), der so ausgebildet ist, daß er (i) sich bei Übertragung der Schmelze von dem Einlaßkanal (32) durch den Rückschlagventileinlaß in den ersten Einschußtopfzylinder (27) in eine erste Position bewegt, und (ii) sich in eine zweite Position bewegt, um das Lecken der Schmelze in den Einlaßkanal (32) auf Grund einer Bewegung der Schmelze von dem ersten Einschußtopfzylinder (27) zu dem Auslaßkanal (33) zu reduzieren.

## Revendications

1. Ensemble de canal de coulée chauffé de co-injection, comprenant :
une buse de co-injection (22) ayant au moins deux canaux de coulée (21, 26) se terminant par la même attaque de coulée ;
un premier collecteur (20) ayant des canaux de coulée pour alimenter une première résine à l'un des canaux de coulée (21) de la buse de co-injection (22) ;
un deuxième collecteur (23) ayant un canal d'entrée et un canal de sortie (32, 33) ;
un ensemble de creuset d'injection de moulage par injection (24) placé dans le deuxième collecteur (23) et disposé entre les premier et deuxième collecteurs (20, 23), dans lequel l'ensemble de creuset d'injection (24) comprend :
un premier piston (28) de creuset d'injection ;
un premier cylindre (27) de creuset d'injection configuré pour décharger la coulée audit canal de sortie (33) suite à l'activation dudit premier piston (27) de creuset d'injection ; et
une première soupape anti-retour (29) disposée de manière solidaire à l'intérieur du premier cylindre (27) de creuset d'injection et configurée pour réduire les fuites de coulée dudit premier cylindre (27) de creuset d'injection audit canal d'entrée (32) en réponse au moins à la décharge partielle de la coulée dudit premier cylindre (27) de creuset d'injection suite à l'activation dudit premier piston (28) de creuset d'injection.

2. Ensemble selon la revendication 1, comprenant en outre un clapet de soupape anti-retour (74) disposé à l'intérieur d'une chambre de soupape anti-retour (73), ladite chambre de soupape anti-retour (73) ayant une longueur qui est égale ou supérieure à deux fois le diamètre dudit clapet de soupape anti-retour (74).

3. Ensemble selon la revendication 2, dans lequel un axe longitudinal dudit premier cylindre (27) de creuset d'injection est disposé de manière sensiblement coaxiale par rapport à au moins une partie d'au moins l'un parmi le canal d'entrée (32) et le canal de sortie (33).

4. Ensemble selon la revendication 1, dans lequel ladite soupape anti-retour (29) comprend :
une entrée de soupape anti-retour en communication de fluide avec ledit canal d'entrée (32) ;
une sortie de soupape anti-retour en communication de fluide avec ledit canal de sortie (33) ;
une chambre de soupape anti-retour (73) ; et
une occlusion de soupape anti-retour (74) configurée pour (i) se déplacer dans une première position suite à la transmission de la coulée dudit canal d'entrée (32) en passant par ladite entrée de soupape anti-retour, dans ledit premier cylindre (27) de creuset d'injection, et (ii) se déplacer dans une deuxième position afin de réduire les fuites de coulée dans ledit canal d'entrée (32) en réponse au mouvement de coulée à partir du premier cylindre de creuset d'injection (27) jusqu'audit canal de sortie (33).
